# EUROPEAN PATENT SPECIFICATION

(11) **EP 2 029 420 B1**
(45) Date of publication and mention of the grant of the patent: **21.01.2015**
(21) Application number: 07747515.0
(22) Date of filing: 18.06.2007
(51) Int. Cl.: B63B 1/24, B63B 1/08, B63B 1/32, B63B 1/40, B63B 1/20

(54) **VESSEL PROVIDED WITH A FOIL BELOW THE WATERLINE**
Schiff mit Tragflügel unterhalb der Wasserlinie
NAVIRE DOTÉ D'UNE AILE PORTANTE SITUÉE SOUS LA LIGNE DE FLOTTAISON

(30) Priority: 19.06.2006 NL 2000109; 28.07.2006 US 494675
(43) Date of publication of application: 04.03.2009
(73) Proprietor: Van Oossanen & Associates B.V., 6705 BB Wageningen (NL)
(72) Inventor: VAN OOSSANEN, Pieter, NL-6705 BB Wageningen (NL)
(74) Representative: Nederlandsch Octrooibureau
(86) International application number: PCT/NL2007/050292
(87) International publication number: WO 2007/148966

(56) References cited:
- WO-A1-2004/020276
- DE-A1- 3 936 280
- JP-A- 11 180 379
- JP-A- 62 244 779
- US-A- 4 915 048
- US-B2- 6 578 506

## Description

### Background of the invention

### Field of the Invention

The present invention relates to a vessel with a single hull, the aft part of which has a smaller water displacement and less breadth lying in the water than the middle or central part, and provided with a foil extending below the waterline.

### Description of the Related Art

Vessels having foils or vane-like members situated under the aft portion of the hull are known in the prior art. In particular, planing vessels are sometimes provided near the end with a foil or flap extending below the hull, in order to ensure that during planing the trim angle that the hull forms with the surface of the water is limited. Such planing vessels generally have a hull displacement that does not change substantially from the middle part in the aft direction.

An example of such a construction is found in US 2,832,304, US 4,915,048, US 6,578,506 and the Abstract of Japanese Patent Application 62008893. In these cases the foil is situated on the aft end of the vessel, and a vertical lift force is generated. Such vessels have no constriction of the submerged part of the vessel, in other words the cross-section of the submerged part of the vessel (perpendicular to the direction of movement of the vessel) does not decrease in the aft direction. In US-6.578.506, for instance, a small sailing vessel with a foil on its rudder blade is disclosed. The foil is inclined upward with respect to the waterline.

Some vessels are known which have one or more foils behind the vessel in order to reduce backwash. In DE-A1-39 26 280 such a vessel is disclosed which has a foil behind its stern. In rest, the foil is located above the waterline. In JP-A-11 180379 a high-speed vessel is disclosed which has two foils behind its stern. The front foil is attached with its leading edge against the stern, and the flow between both foils is used to reduce backwash. In rest, the foils are located above the waterline.

Furthermore, some catamarans are provided with fins for the purpose of reducing ship movement in waves. Such fins do not always have a foil profile. An example of the use of these fins in a boat is found in US-A-3,208,422.

US 6 578 506 B2 (BIEKER PAUL G) discloses a vessel with hydrofoil device for reducing wake formation on a partially immersed hull of the single hulled vessel, said hydrofoil device comprising: a transverse hydrofoil positioned below the surface of the water when said vessel is in the water, said hydrofoil being capable of a positive angle of attack of between 2 to 8 degrees to the static waterplane, the leading edge of said hydrofoil being between 5 and 15% of the immersed length of the vessel aft of the transom of said vessel, and the upper surface of said hydrofoil being between 5 and 15% of the immersed length of the vessel below the static waterplane of said vessel, a strut or multiple struts for attaching said hydrofoil to said vessel, a means for attaching said hydrofoil to said strut or struts, and a means for attaching said strut or struts to said vessel.
Additionally, International Publication No. WO 2004/020276 A1 discloses previous work of the present inventor wherein a foil is located entirely-under the aft portion of a vessel to improve performance.

### Summary of the invention

The present invention relates to a vessel having a non-planing hull according to claim 1 such as a sailing boat or a motor-driven vessel. It can be a relatively small vessel such as a leisure vessel or a large vessel such as a tanker, container ship and the like. Such vessels are provided with a constriction, in other words the cross-sectional hull area below the waterline decreases in the longitudinal direction of the vessel, viewed in the aft direction. Such a reduction of the cross-sectional hull area is at least one-third to one-half relative to the location having the largest cross-sectional area of the submerged part of the vessel for medium-speed craft, and up to 100% in the case of typical merchant ships. In the case of some such vessels, the transom may not be submerged in the water, but may lie above the waterline. At the position of a constriction, the flow of the water during forward movement of the vessel will be directed upwards and/or inwards.

The terms length, breadth, waterline, etc. are used in this description. These terms are associated with the position of the vessel in the water. While it is being propelled in the usual direction, the direction of propulsion is the longitudinal direction in this case.

In the present invention a foil is provided near the place where the greatest flow constriction occurs. This foil is arranged in such a way that, apart from an upward lifting force, a forward propulsion force is provided. This propulsion force manifests itself by faster travel in the same conditions or by reduced fuel consumption, or by both of these.

Specifically, in accordance with an aspect of the invention, the invention provides a vessel with a non-planing hull, of which the stern or aft portion has a smaller water displacement than the central portion of the hull, and which hull is provided with a foil attached at a distance thereto, which is below the surface of the water during operation, wherein said foil is attached in proximity to the aft end of the hull in such a way that the leading edge of the foil is at most half a chord length of the foil in front of the position where the aft end of the hull substantially leaves the water and said foil, as defined by its chord, is tilted downwards by its leading edge with respect to the horizontal.

The decrease in hydrodynamic resistance which is achieved is based on the fact that the foil, in the flow as exists below the aft-body of the vessel, develops a propelling force on the foil, and thus on the vessel, which is significantly larger than the drag of the foil itself. It should be understood that this theory in no way affects the scope of protection of the present patent.

It is of importance in realizing a propelling force on the foil to orient the foil at an angle with respect to the direction of the upward-sloping flow of the water below the rear part of the vessel. This orientation can be achieved, in general, by specifying the leading edge of the foil to have downward tilt angle (i.e., greater than zero degrees) with respect to the horizontal.

it should be noted that a foil is highly preferred to achieve the required lift force which is roughly perpendicular to the direction of the incident flow. One skilled in the art would understand that various foil profiles could be used, including the well-known NACA aerodynamic profiles as well as the German Eppler shapes (*see e.g.* "Theory of Wing Sections", by Ira H. Abbott and Albert E. von Doenhoff, Dover Publications, Inc. New York, and "Airfoil Design and Data", by Richard Eppler, Springer-Verlag Berlin, ISBN 3-540-52505-X). A curved flat plate or other element may possibly be substituted for the foil to achieve a net forward thrust force, but such is not preferred due to inefficiencies resulting from the tendency of such elements to produce flow separation and resultant high drag for pitch angles between the plate and incident flow greater than about 1-2 ° that can occur, for instance, during normal operation due to changes in vessel speed. Hence "foil" as used herein should be interpreted to cover such curved plates or elements giving rise to such a lifting force.

Regarding the positioning of the foil relative to the hull, some ships have a flat transom stern. In the case of most ships with such a stern, the "position where the rear side of the hull substantially leaves the water" will, in general, be the longitudinal location of the bottom of the transom, if submerged or a point on the bottom of the adjacent aft hull portion if the transom is not submerged. In the case of a ship which at its aft end has a recess or which at its rear side is provided with sponsons or floats and where the hull leaves the water between the sponsons, the position where the hull substantially leaves the water will usually be the longitudinal location where the hull in the recess or between the sponsons leaves the water.

In summary, according to an aspect of the invention, at least half the chord of the foil is behind a vertical line through the location where the hull leaves the water.

In this application certain angles and dimensions have been defined in the following way:
The average angle of the buttock lines at the rear of the ship, α, is the angle between the longitudinal tangent line to the aft-body of the hull below the water and the horizontal. Angle α also is referred to as the angle between the tangent to the vertical longitudinal cross-sections of the aft-body of the ship and the horizontal. In modern, conventional ships including merchant ships, this angle α will normally be between about 8° and 16°.

The angle of the tangent to the buttock lines at the rear of the vessel (or tangent to the vertical longitudinal cross-sections) at the longitudinal position of the leading edge of the foil, β, is the angle between the tangent to the hull below the water surface at the longitudinal position of the leading edge of the foil and the horizontal. In some embodiments of the invention, β is about 11 ° to about 25°.

The angle of the chord of the foil with respect to the horizontal is referred to as γ. The chord of the foil is the (imaginary) line through the leading and the trailing edges of the foil. As used herein the "tilt" of the foil is determined by the angle γ.

The length of this chord preferably depends on the length of the vessel. According to a particular embodiment of the invention, the length of the foil is approximately between 2% and 10% of the length of the waterline of the ship operating at its normal draught.

In a preferred embodiment, the foil is mounted near the rear of the vessel in such a way, that a vertical (or perpendicular) line through the location where the rear or aft-part of the hull substantially leaves the water intersects the foil at less than or equal to about 0.5 times the length of the chord of that foil measured from its leading edge, or is in front of its leading edge.

In a further embodiment, the leading edge is positioned less than or equal to about 0.75 times the chord length behind a longitudinal location where the aft hull portion leaves the surface of the water.

In a further embodiment of the invention, the leading edge of the foil is tilted downwards with its chord at an angle γ of between greater than 0° and about 22° with respect to the horizontal. The exact angle depends on the angle β. In general, when the angle β is large, a larger downward tilt angle be chosen.

According to an embodiment of the invention especially suited for newly-built ships, the foil is located substantially entirely within the limits (vertical projection) of the vessel. In another embodiment, especially suited for attaching the foil to existing ships, the leading edge of the foil is located behind the aft end of the vessel.

In an embodiment which is especially suited for newly-built ships, the buttocks of the hull are configured with a greater upwards slope or inclination in front of or at the longitudinal position of the leading edge of the foil and the rearward-most part of the hull above the foil is located substantially above the water surface. In this embodiment, the greater steepness of the buttock lines preferably starts between about 0.5 and about 1.5 times the chord length of the foil in front of the longitudinal position of the leading edge of the foil.

In the variation in which the foil is located substantially entirely within the aft limits of the vessel, it is proposed, according to a particular variation of the invention, locally to provide the hull with a recess at the aft end. The length of a recess of this type is preferably from about 0.75 to about 1.50 times the length of the chord of the foil.

According to a further specification, the distance from the leading edge of the foil to the hull is greater than about 0.10 times, and preferably between about 0.2 to about 0.5 times, the chord length of the foil.

The foil may conceivably be fastened to the stern by any way. If the foil extends wholly or partly below the hull, it may be fastened to the rudder headbox, i.e. to the stationary portion of the rudder construction which extends below the hull. It may also be beneficial to attach (streamlined) struts in order further to support said foil.

According to an advantageous further embodiment of the invention, the foil for its largest part extends beyond the aft end of the vessel. This latter construction is particularly important if existing vessels have to be retrofitted with this fuel-saving construction. If the foil is entirely placed behind the aft part of the vessel, it is, in some cases, desirable to be able to rotate the support of the foil upward and to the front when entering a harbor. In that case the foil and a frame for attaching the foil can be rotatable or foldable onto the deck of the vessel.

However, in many retrofit cases, it will be necessary to provide a construction in which a portion of the foil extends below the vessel. In new constructions, preference is given to the former variation in which a recess is formed in the hull at the site of the foil where the hull rearward from a certain point extends above the water (i.e., rearward from the point where the hull substantially leaves the water).

In a further embodiment, the hull near the aft end of the vessel includes floats or sponsons on both sides of the hull, wherein the foil extends between both sponsons and below the surface of the water. The hull between the sponsons extends at least partially above the surface of the water. In an embodiment, the hull comprises a recess between the sponsons within the confines of the sponsons and located aft of the front side of the recess which is substantially above the surface of the water. In particular during service, at that location, the hull is above the surface of the water. The foil is, however, located below the surface of the water.

With the current invention, in which the aft portion of the hull above the foil is entirely or in part above the surface of the water, a propelling force is successfully realized via the foil, wherein the disadvantageous effect of the acting low pressure on the hull of the ship at that location is counteracted.

The shape of the foil is preferably adapted to the shape of the submerged portion of the ship at the site of the foil (in vertical projection). For large vessels, the span of the foil is generally smaller than the width of the portion of the ship below the waterline, i.e. the foil preferably does not extend past the submerged portion of the ship, although this is theoretically possible.

It is preferred that the angle of the chord of the foil is adjustable with respect to the water surface during service for realizing an optimal effect.

The invention relates, to vessels with non-planing hulls, i.e. to vessels preferably having a length of at least about 50m. More particularly, the present invention relates to a vessel having a relatively low speed, for instance corresponding to a Froude number of less than about 0.5.

### Brief description of the drawings

The invention will be explained in greater detail below with reference to exemplary embodiments illustrated in the drawings, in which:
Fig. 1 schematically depicts a vessel not provided with the means according to the present invention;
Fig. 2A shows in side view a vessel according to earlier designs of the present inventor utilizing a foil;
Fig. 2B shows the vessel according to Fig. 2A in top view;
Fig. 2C shows the vessel according to Fig. 2A in rear view;
Fig. 3A shows a portion of a vessel comprising a first embodiment of the present invention, suitable for newly-built ships;
Fig. 3B is a rear view of the embodiment of Fig. 3A;
Fig. 4A depicts a second embodiment of the present invention constituting an improved variation of the construction shown in Fig. 2A and 2B, particularly suited for construction on both existing and newly-built ships;
Fig. 4B depicts a third embodiment constituting an alternative improved variation of the construction in Fig. 2A;
Fig. 5A shows a still further embodiment in which sponsons are used, in perspective view from the rear;
Fig. 5B is a side view of the embodiment of Fig. 5A;
Fig. 5C is a rear view of the embodiment of Fig. 5A;
Fig. 6 depicts an embodiment in which the hull bottom rises relatively steeply, which can occur particularly in full ships.

### Detailed description of embodiments

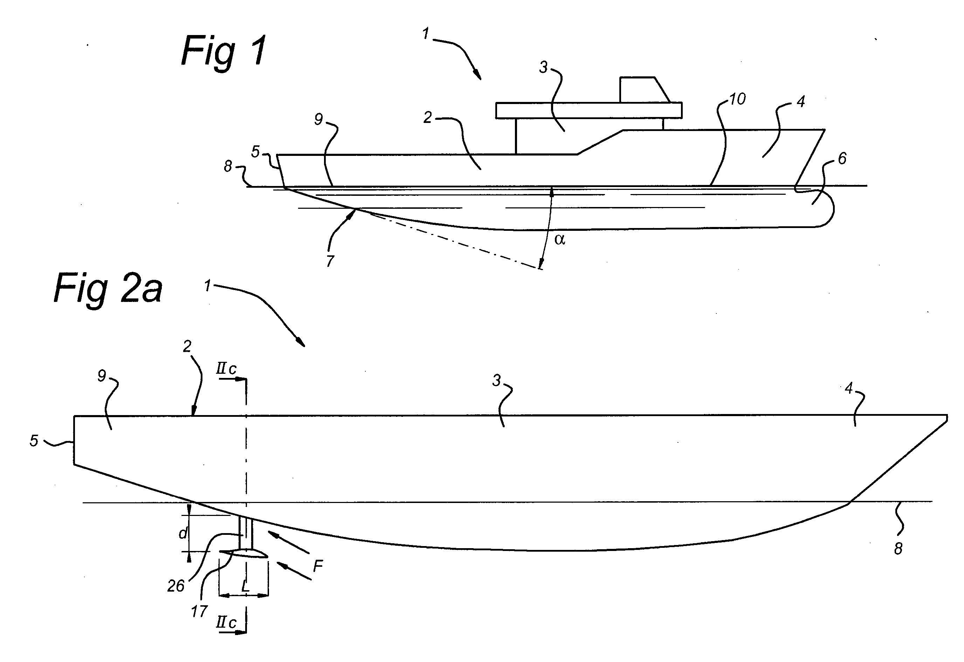

In Fig. 1, reference numeral 1 denotes a conventional vessel in its entirety, provided with a hull 2 having a central or middle portion 3. Reference numeral 4 denotes the forward hull portion with a bulbous bow extension denoted by 6. In proximity to the aft hull portion of the vessel, denoted by 9, up to the stern 5 is located a low pressure region 7 which in addition to frictional drag, generates further hydrodynamic resistance.

Although not shown in Fig. 1, the transom at the stern or aft end 5 of the vessel sometimes projects above the waterline 10, such as in some sailing vessels and merchant ships. Also, the average angle α of the bottom of the aft hull portion 9, with respect to the horizontal which for zero vessel velocity in calm conditions would essentially be the water surface (depicted as 8), is depicted in Fig. 1.

Figs. 2A-2C depict previous efforts by the present inventor to improve ship performance using a foil. In Figs. 2A-2C, vessel 1 includes hull 2 with central portion 3, forward portion 4, and aft portion 9, having an aft end 5. Vessel 1, which is a sailing vessel-type as compared to the freight vessel-type shown in Fig. 1, is shown on surface 8 of a body of water, at conditions of zero hull velocity in the forward direction. The portion of the line representing water surface 8 on hull 2 also represents the waterline of vessel 1, as used in the subsequent discussion.

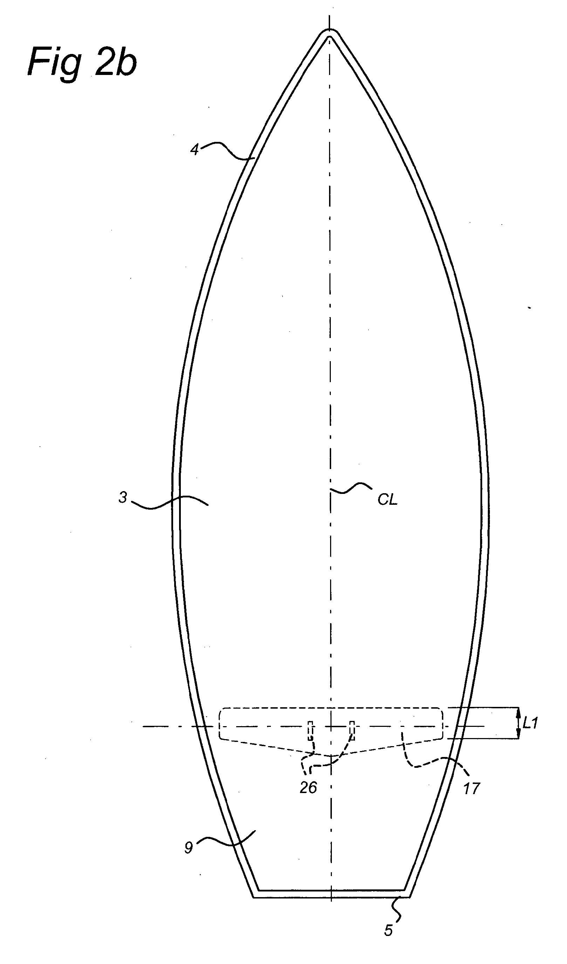

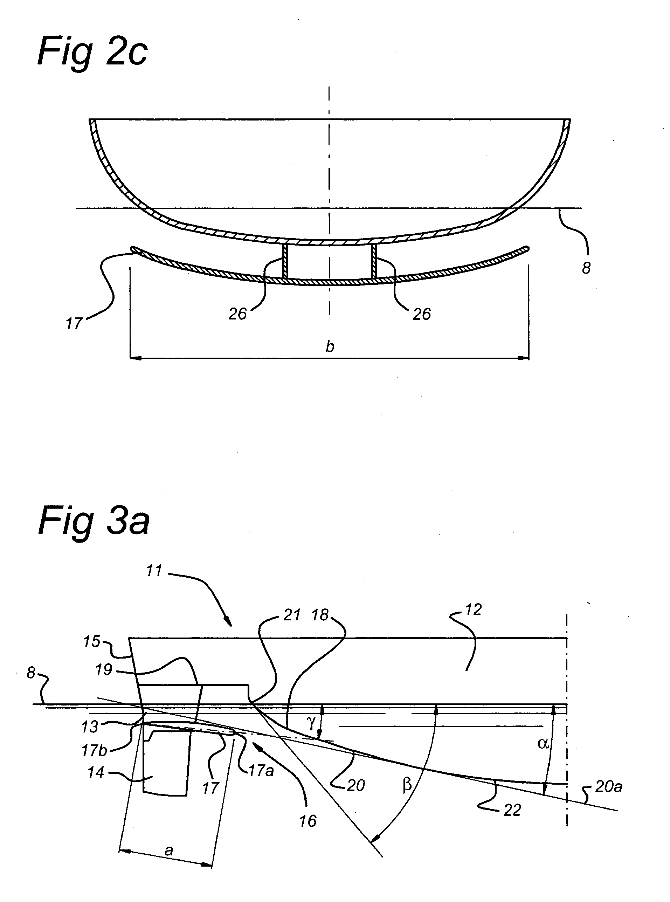

A foil 17 was fitted under vessel 1 below the water surface 8. Foil 17 was fixed in an immovable manner on the vessel by means of one or more supports 26. The distance between foil 17 and the hull 2 in the Fig. 2A embodiment was constant and is designated d. The length a of the foil at the position of the axis denoted CL (Fig. 2B) was approximately equal to the distance d. The length a of the foil decreased from the longitudinal centerline axis CL to the sides of the vessel, as can be seen from Fig. 2B. The longest length is indicated by L in Fig. 2A, while the shortest length is indicated by L₁ in Fig. 2B. This reduction of the length is obtained owing to the fact that the rear side of the foil was tapered. The breadth b of the foil (Fig. 2C) was at least four times, the length L of said foil.

As can be seen from Fig. 2A, the profile of foil 17 was of such a shape that it could cause a lifting force to be produced by the local flow rate at certain points (depicted schematically by arrows F), namely points where the local flow is directed obliquely upwards (and backwards). For certain foil orientations and positions, as subsequently determined, this lifting force is not purely vertical, but can be directed slightly forward. The resultant arising from this has a component in the forward direction.

In accordance with the present invention, which invention constitutes an improvement over the above-described constructions, a vessel for operating on a body of water comprising: a non-planing hull having a waterline and a longitudinal direction with a forward portion, an aft portion, and a central portion, the hull configured to have the aft portion with a smaller water displacement relative to a water displacement at the central portion; and a foil positioned proximate the end of the aft hull portion, and below the surface of the water, and spaced from the hull, the foil having a chord, and a leading edge and a trailing edge relative to a forward direction, wherein the leading edge of the foil is tilted at a downward angle relative to the horizontal, wherein the leading edge is positioned less than or equal to about 0.5 times the chord length forward of a longitudinal location where the aft hull portion leaves the surface of the water, and wherein the foil has a chord and profile in longitudinal cross section, with a configuration to provide a lifting force, the tilt angle of the foil being measured with respect to the chord. In most of the present embodiments, the distance between the foil and the hull does not need to be constant. The foil can be straight.

A first embodiment of the invention is shown in Figs. 3A-3B, in which the vessel as a whole is denoted by 11, the hull by 12, and a foil 17 is attached below hull 12. Foil 17 has a chord length a which is about 2% to 10 %, preferably about 2% to 4 %, of the total length of vessel 11 at the waterline. The trailing end 17b of foil 17 is approximately even with the vertical tangent to the stern or transom 15. As may be seen from the drawing, hull 12 is provided at the site of foil 17 with a recess 16. Recess 16 includes a portion 18 with greater steepness, relative to the inclination of the bottom of the aft hull portion distant the recess (i.e., location 20 in Fig. 3A), and a free portion 19 above the surface of the water 8. The portion 18 forward of foil leading edge 17a is steeper than the usual approximately 8° to 16° in, for instance, merchant ships. It was found that an inclination or "rising" angle β of about 11 ° to about 25° has an advantageous effect.

The total length of the steeper portion 18 is from about 1.0 to about 1.5 times the total chord length of foil 17 in front of the leading edge 17a of foil 17. Foil 17 is positioned about 0.5 times the chord length of the foil 17 in front, up to about 0.75 times the chord of the foil 17 behind, the point where the water surface releases the hull (location 21, in Fig. 3A). The free part of step 19 will in general have a height of about 0.25 to about 0.75 times the chord length of the foil 17 above the water surface. The leading edge 17a of the foil 17 will be directed with a downward tilt with respect to the horizontal (water surface 8 in Fig. 3A) for the best result.

In the embodiment shown in Figs. 3A-3B, foil 17 is fastened to the headbox 13 of rudder 14. The foil 17 is at an angle γ with respect to the horizontal (~ water surface 8), and this angle γ is from greater than 0° to about 22°. The tangent line to the hull 12 at location 20 distant recess 16, is denoted by 20a. The line 20a is at an angle α of from 8° to 16° with respect to the horizontal.

The construction shown in Figs. 3A-3B is particularly practicable in the case of newly-built ships. The recess 16 may be formed at little additional cost. The position of the foil is such that there is little or no risk of damage during maneuvering (e.g. docking). Moreover, it has been found that a construction of this type does not negatively affect the tonnage of the vessel because technical installations, which may easily be regrouped, are usually present in the aft portion of the vessel. The construction shown in this case allows fuel consumption to be reduced by about 20% maximum. This means that in the case of relatively large vessels, in particular, i.e. vessels having a length of more than 50 meters, the cost recovery period is less than one year.

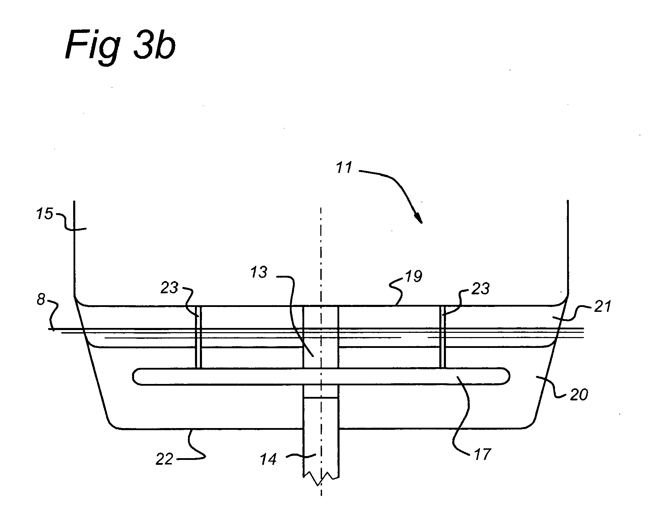

In Fig. 3B, a rear view of vessel 11 which depicts foil 17 being mounted to the fixed part (headbox) of rudder 14 and has been provided with additional streamlined struts 23, for strength.

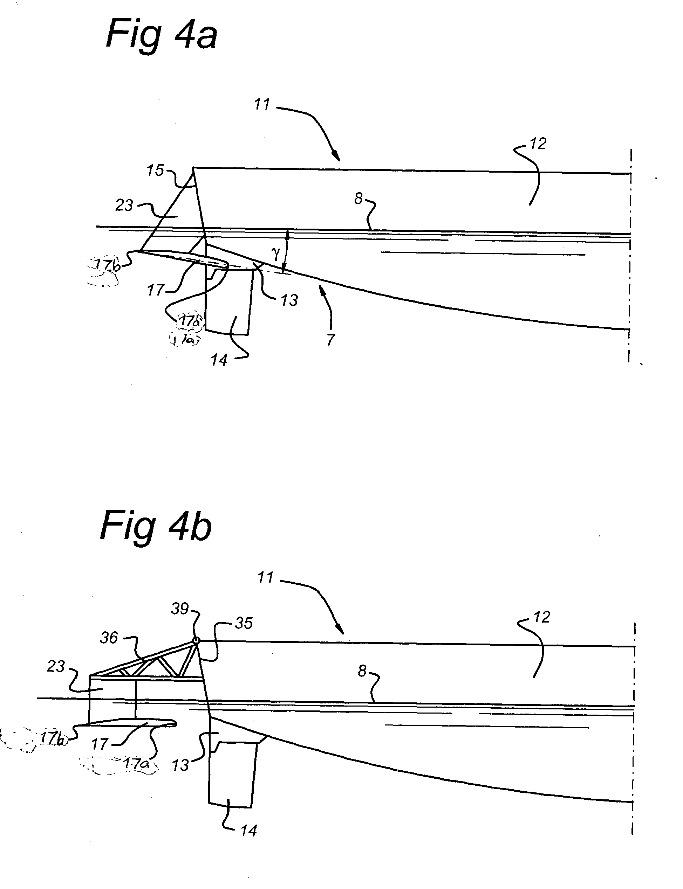

Fig. 4A depicts an embodiment similar to Fig. 2A but with improved performance characteristics relative thereto. In Fig. 4A, the hull of the vessel denoted by 12 includes a stern or transom 15 that extends to the water surface 8. The foil is denoted by 17 and extends only partly below the hull, in proximity to the stern 15, the remainder being outside (rearward of) the vessel, i.e. beyond the stern 15. Reference numeral 23 denotes a streamlined strut with which foil 17 is fastened to the vessel. In this embodiment, the angle between the chord of foil 17 and the horizontal (again represented by water surface 8 in non-moving calm conditions) is between greater than 0° and about 12°. The length of the chord of the foil, as in the preceding example, is from approximately 2% to 10% of the length of the hull at the waterline. The leading edge 17a of foil 17 is positioned less than or equal to 0.5 times the chord length of foil 17 in front of the location where hull 12 leaves the water, in this case, along transom 15. The rear 17b of the foil is preferably located below the water surface 8 by a depth of from 0 to 0.75 times the length of the chord of foil 17.

The variation depicted in Fig. 4A may not only be applied to new constructions but also subsequently to existing vessels. In this case, too, a substantial propelling force is obtained and the low pressure region 7 at the relevant part of the aft hull portion is largely eliminated.

Fig. 4B shows an alternative variation which also is particularly suitable for subsequent application to existing ships. For this purpose, a support 36, to which foil 17 is fastened, is attached to the stern 35. This foil 17 extends entirely outside the vertical projection of vessel 11. The length of the foil preferably corresponds to the above-mentioned values, i.e. from about 2% to about 10% of the length of the hull at the waterline of the ship, depending on the size of the ship. The distance between leading edge 17a of the foil and the stern 35 of the vessel is about equal to the length of the chord of foil 17. The depth with respect to the surface of the water 8 at trailing edge 17b of the foil is approximately 0 to 0.5 times the length of the chord of the foil. In contrast to the earlier examples, the foil preferably has less downward tilt with respect to the horizontal, i.e. the chord of foil 17 is at a downward tilt angle γ of from greater than 0° to about 6°.

In order to obtain the beneficial effect in the embodiment of Fig. 4B, in general, the chord of the foil will be at a slightly upward angle with respect to the local flow of the water below the hull, in such a way that the peak of the wave which is normally created in the region aft of the stern during operation (i.e., forward movement of hull 12) will be lowered. In that case, the resistance will be lowered, as the foil 17 causes lift with a forwardly directed force component. The exact tilt angle of the foil 17 with respect to the horizontal (i.e., surface of water at zero hull velocity) depends, amongst other, on the flow behind the hull. In this embodiment, the tilt angle of the chord can even be adjustable for obtaining the most optimal effect during service.

Also, in the Fig. 4A and 4B embodiments, the struts 23 or struts 23 plus support 36 (Fig. 4B) can be liftable to up or above the hull in order to reduce the overall length of the vessel, for instance in a harbor. To that extent, the struts 23 or support 36 can be provided with a hinge 39, such as shown in Fig. 4B, to pivot the assembly of foil 17, struts 23, and support 36 up and onto the deck. If necessary, a lock, for instance to the stern 15 or 35, could be provided.

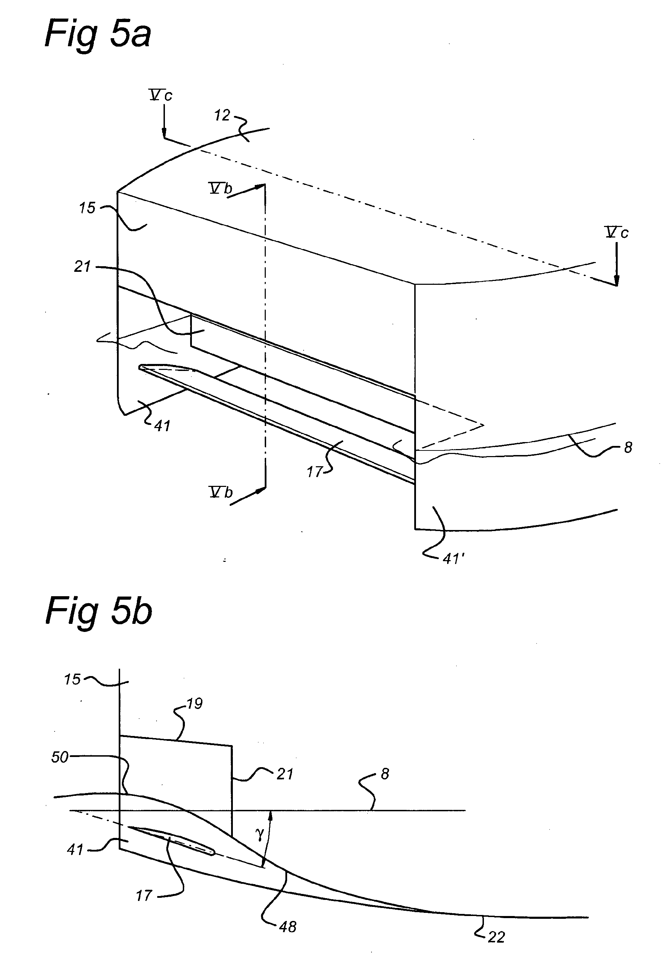

In Figs. 5A-5C an embodiment of the invention is shown, in which the stern of the ship is provided with sponsons 41, 41' at the rear of the ship, particularly of interest for newly built ships. Between the sponsons the hull can rise steeply and/or be provided with a recess as shown in Fig. 3A. Preferably, the hull between the sponsons has a cross-section as shown and described with respect to Fig. 3A.

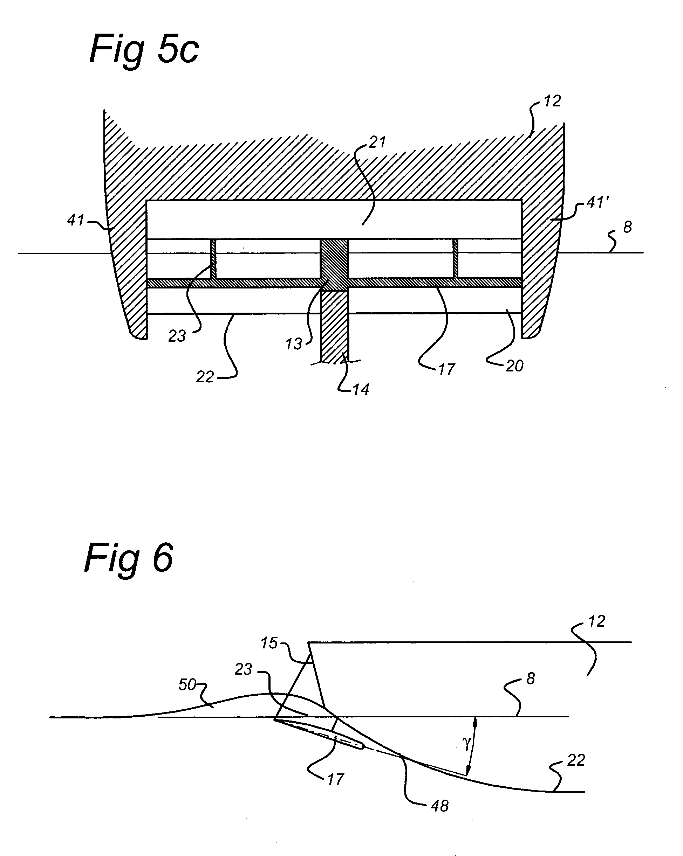

In Fig. 5A a perspective view from behind is shown, which shows in a schematic way such a vessel. Foil 17 can be mounted on and between sponsons 41, 41', as shown. In Fig. 5B, a longitudinal cross-section of such a vessel, the position of foil 17 is depicted with leading edge 17a behind the location where the hull would leave the water (at zero hull velocity), generally somewhere along hull bottom surface 48 or recess wall 21, depending on ship loading. Also, the "dynamic" waterline of the vessel during operation (forward movement) is depicted at 50 in Fig. 5B, showing an upward and rearward local flow in the vicinity of foil 17. Fig. 5C is a transverse cross-section and depicts possible mounting features including one or more struts 23, and rudder headbox 13.

Fig. 6 depicts a further embodiment of the invention for some existing ships such as a slow speed dredger or oil tanker fully loaded or for new ships, in which the aft end of the ship has a steeply rising bottom. Without foil 17 separation of the flow may occur. By proper placement of foil 17, the flow will not separate and keeps following the bottom of the hull. The trailing edge of the foil is here positioned up to 50% of the chord length below the hull and the leading edge relatively much closer (with respect to earlier shown embodiments).

It will be clear from the foregoing examples that various variations are possible within the scope of the concept of the invention. For example, features of the inventor's previous designs, as shown in Figs. 2A-2C can be adopted to the extent they are not inconsistent with the present invention. In addition, a person skilled in the art will understand that further modifications are possible within the scope of the inventive concept as set out above. Protection is however determined by the scope of the appended claims.

## Claims

1. A vessel (1) for operating on a body of water comprising:
a non-planing hull (2) having a waterline (10) and a longitudinal direction with a forward portion (4), an aft portion (9), and a central portion (3), the hull configured to have the aft portion with a smaller water displacement relative to a water displacement at the central portion (3); and
a foil (17) positioned proximate the end of the aft hull portion (9), and, in use, below the surface of the water, and spaced from the hull (2), the foil (17) having a chord, and a leading edge (17a); and a trailing edge (17b) relative to a forward direction,
wherein the leading edge of the foil (17), in use, is tilted at a downward angle relative to the horizontal, and
wherein the foil (17) has a chord and profile in longitudinal cross section, with a configuration to provide a lifting force, the tilt angle of the foil (17) being measured with respect to the chord, and
wherein the foil (17) is arranged in such a way that, apart from an upward lifting force, a forward propulsion force is provided,
**characterised in that** at least half the chord of the foil (17) is behind a vertical line through the location where, in use, the aft portion of the hull leaves the water.

2. The vessel according to claim 1, wherein said foil (17) is below the waterline (10).

3. The vessel according to claim 1 or 2, wherein said leading edge (17a) is positioned less than or equal to about 0.75 times the chord length behind a longitudinal location where, in use, the aft hull portion (9) leaves the surface of the water.

4. The vessel according to any one of the preceding claims, wherein said foil (17) is positioned in the upward flow of the water below the aft hull portion (9) during sailing of the vessel.

5. The vessel according to any one of the preceding claims, wherein the tilt angle is greater than zero and less than or equal to about 22°.

6. The vessel according to any one of the preceding claims, wherein the spacing between the foil leading edge (17a) and the hull (2) is about 0.2 to about 0.5 times the length of the chord.

7. The vessel according to any one of the preceding claims, wherein the chord length is about 2% to about 10% of a longitudinal length of the hull at the waterline (10).

8. The vessel according to any one of the preceding claims, further comprising a recess (16) formed in the aft hull portion (9) extending forwardly from the aft end, wherein the location where, in use, the aft hull portion (9) leaves the water is located within a vertical projection of the recess (16), and wherein the foil (17) is positioned at least partially within a vertical projection of the recess (16).

9. The vessel as in claim 8, wherein the hull (2) has a sponson (41, 41') located at each side of the hull at the aft portion, each sponson defining at least a side part of the recess (16) and, in use, extending vertically beneath the surface of the water, wherein the foil (17) is mounted to, and between, the sponsons beneath the surface of the water.

10. The vessel as in claim 8, wherein the foil (17) is positioned with the leading edge (17a) being from less than or equal to about 0.5 times the chord length in front of the location where, in use, the aft hull portion (9) leaves the water to about 0.75 times the chord length behind the location where the aft hull portion (9) leaves the water, in the longitudinal direction.

11. The vessel according to any one of the preceding claims, wherein a bottom surface of the aft hull portion (9) in a region proximate the aft end is inclined relative to the bottom surface of the aft hull portion distant the aft end, and wherein the angle between the horizontal and the tangent to the hull (2) in the inclined region taken in a vertical plane at the longitudinal position of the foil leading edge (17a) is about 11° to about 25°.

12. The vessel according to any one of the preceding claims, wherein a part of the foil (17) including the leading edge (17a) extends beneath the aft hull portion (9) forward of the longitudinal location where, in use, the aft hull portion (9) leaves the surface of the water, wherein the angle between the horizontal and the tangent to the hull (2) at the location where the aft hull portion (9) leaves the water taken in a vertical plane is about 8° to about 16°, and wherein the tilt angle of the foil (17) is less than or equal to about 12°.

13. The vessel according to any one of the preceding claims, wherein the leading edge of the foil (17a) is tilted at a downward angle relative to the horizontal at an angle that is greater than zero degrees and less than or equal to about 22°, and
wherein the chord length is about 2% to about 10% of the longitudinal length of the hull (2) at the waterline (10).

## Patentansprüche

1. Schiff (1) zum Betrieb auf einem Gewässer, umfassend:
einen nicht gleitenden Rumpf (2) mit einer Wasserlinie (10) und einer Längsrichtung mit einem vorderen Abschnitt (4), einem hinteren Abschnitt (9) und einem mittleren Abschnitt (3), wobei der Rumpf so ausgebildet ist, dass der hintere Abschnitt eine geringere Wasserverdrängung im Verhältnis zu einer Wasserverdrängung am mittleren Abschnitt (3) aufweist; und
einen Tragflügel (17), der nahe dem Ende des hinteren Rumpfabschnitts (9) und bei Betrieb unterhalb der Wasseroberfläche angeordnet und vom Rumpf (2) beabstandet ist, wobei der Tragflügel (17) eine Sehne sowie eine Vorderkante (17a) und eine Hinterkante (17b) relativ zu einer Vorwärtsrichtung aufweist,
wobei die Vorderkante des Tragflügels (17) bei Betrieb um einen Abwärtswinkel relativ zur Horizontalen geneigt ist, und
wobei der Tragflügel (17) im Längsquerschnitt eine Sehne und ein Profil aufweist, mit einer Konfiguration, die eine Auftriebskraft bereitstellt, wobei der Neigungswinkel des Tragflügels (17) bezüglich der Sehne gemessen wird, und
wobei der Tragflügel (17) derart angeordnet ist, dass neben einer nach oben gerichteten Auftriebskraft eine nach vorn gerichtete Vortriebskraft bereitgestellt wird,
**dadurch gekennzeichnet, dass**
mindestens die Hälfte der Sehne des Tragflügels (17) hinter einer senkrechten Linie durch die Stelle liegt, an der der hintere Abschnitt des Rumpfes bei Betrieb das Wasser verlässt.

2. Schiff nach Anspruch 1, wobei sich der Tragflügel (17) unter der Wasserlinie (10) befindet.

3. Schiff nach Anspruch 1 oder 2, wobei die Vorderkante (17a) weniger als oder gleich ca. 0,75 mal der Sehnenlänge hinter einer längsverlaufenden Stelle positioniert ist, an der der hintere Rumpfabschnitt (9) bei Betrieb die Wasseroberfläche verlässt.

4. Schiff nach einem der vorstehenden Ansprüche, wobei der Tragflügel (17) in der Aufwärtsströmung des Wassers unter dem hinteren Rumpfabschnitt (9) positioniert ist, während das Schiff segelt.

5. Schiff nach einem der vorstehenden Ansprüche, wobei der Neigungswinkel größer als Null und kleiner als oder gleich ca. 22° ist.

6. Schiff nach einem der vorstehenden Ansprüche, wobei der Abstand zwischen der Tragflügelvorderkante (17a) und dem Rumpf (2) ca. 0,2 bis ca. 0,5 mal der Länge der Sehne beträgt.

7. Schiff nach einem der vorstehenden Ansprüche, wobei die Sehnenlänge ca. 2% bis ca. 10% einer längsverlaufenden Länge des Rumpfes an der Wasserlinie (10) beträgt.

8. Schiff nach einem der vorstehenden Ansprüche, ferner umfassend eine Aussparung (16), die in dem sich vom hinteren Ende nach vorn erstreckenden hinteren Rumpfabschnitt (9) ausgebildet ist, wobei die Stelle, an der der hintere Rumpfabschnitt (9) bei Betrieb das Wasser verlässt, innerhalb eines vertikalen Vorsprungs der Aussparung (16) liegt, und wobei der Tragflügel (17) zumindest teilweise innerhalb eines vertikalen Vorsprungs der Aussparung (16) positioniert ist.

9. Schiff nach Anspruch 8, wobei der Rumpf (2) einen an jeder Seite des Rumpfes am hinteren Abschnitt angeordneten Bootsstummel (41, 41') aufweist, wobei jeder Bootsstummel mindestens einen Seitenteil der Aussparung (16) definiert und sich bei Betrieb senkrecht unter der Wasseroberfläche erstreckt, wobei der Tragflügel (17) an und zwischen den Bootsstummeln unter der Wasseroberfläche angebracht ist.

10. Schiff nach Anspruch 8, wobei der Tragflügel (17) in Längsrichtung so positioniert ist, dass die Vorderkante (17a) von weniger als oder gleich ca. 0,5 mal der Sehnenlänge vor der Stelle, an der der hintere Rumpfabschnitt (9) bei Betrieb das Wasser verlässt, bis zu ca. 0,75 mal der Sehnenlänge hinter der Stelle, an der der hintere Rumpfabschnitt (9) das Wasser verlässt, liegt.

11. Schiff nach einem der vorstehenden Ansprüche, wobei eine Bodenfläche des hinteren Rumpfabschnitts (9) in einem Bereich nahe des hinteren Endes relativ zur Bodenfläche des vom hinteren Ende entfernt liegenden hinteren Rumpfabschnitts geneigt ist, und wobei der Winkel zwischen der Horizontalen und der Tangente zum Rumpf (2) in dem geneigten Bereich, genommen in einer senkrechten Ebene, an der längsverlaufenden Position der Tragflügelvorderkante (17a), ca. 11° bis 25° beträgt.

12. Schiff nach einem der vorstehenden Ansprüche, wobei ein Teil des Tragflügels (17) einschließlich der Vorderkante (17a) sich unter dem hinteren Rumpfabschnitt (9) vor der längsverlaufenden Stelle, an der der hintere Rumpfabschnitt (9) bei Betrieb die Wasseroberfläche verlässt, erstreckt, wobei der Winkel zwischen der Horizontalen und der Tangente zum Rumpf (2) an der Stelle, an der der hintere Rumpfabschnitt das Wasser verlässt, genommen in einer senkrechten Ebene, ca. 8° bis ca. 16° beträgt, und wobei der Neigungswinkel des Tragflügels (17) kleiner als oder gleich ca. 12° ist.

13. Schiff nach einem der vorstehenden Ansprüche, wobei die Vorderkante des Tragflügels (17a) um einen Abwärtswinkel relativ zur Horizontalen um einen Winkel geneigt ist, der größer als 0° und kleiner als oder gleich ca. 22° ist, und wobei die Sehnenlänge ca. 2% bis ca. 10% der längsverlaufenden Länge des Rumpfes (2) an der Wasserlinie (10) beträgt.

## Revendications

1. Navire (1) à utiliser sur un plan d'eau comprenant :
une coque non planante (2) ayant une ligne de flottaison (10) et une direction longitudinale avec une partie avant (4), une partie arrière (9), et une partie centrale (3), la coque étant configurée pour avoir la partie arrière avec un plus petit déplacement d'eau par rapport à un déplacement d'eau au niveau de la partie centrale (3) ; et
une aile portante (17) positionnée à proximité de l'extrémité de la partie de coque arrière (9), et, en utilisation, en dessous de la surface de l'eau, et espacée de la coque (2), l'aile portante (17) ayant une corde, et un bord d'attaque (17a) et un bord de fuite (17b) par rapport à une direction vers l'avant,
dans lequel le bord d'attaque de l'aile portante (17), en utilisation, est incliné selon un angle vers le bas par rapport à l'horizontale, et
dans lequel l'aile portante (17) a une corde et un profil en coupe longitudinale, avec une configuration pour fournir une force de levage, l'angle d'inclinaison de l'aile portante (17) étant mesuré par rapport à la corde, et
dans lequel l'aile portante (17) est agencée de telle manière que, mise à part une force de levage vers le haut, une force de propulsion vers l'avant est fournie,
**caractérisé en ce qu'**au moins la moitié de la corde de l'aile portante (17) est derrière une ligne verticale à travers l'emplacement où, en utilisation, la partie arrière de la coque quitte l'eau.

2. Navire selon la revendication 1, dans lequel ladite aile portante (17) est en dessous de la ligne de flottaison (10).

3. Navire selon la revendication 1 ou 2, dans lequel ledit bord d'attaque (17a) est positionné à 0,75 fois ou moins la longueur de corde derrière un emplacement longitudinal où, en utilisation, la partie de coque arrière (9) quitte la surface de l'eau.

4. Navire selon l'une quelconque des revendications précédentes, dans lequel ladite aile portante (17) est positionnée dans le flux vers le haut de l'eau en dessous de la partie de coque arrière (9) pendant la navigation du navire.

5. Navire selon l'une quelconque des revendications précédentes, dans lequel l'angle d'inclinaison est plus grand que zéro et inférieur ou égal à environ 22°.

6. Navire selon l'une quelconque des revendications précédentes, dans lequel l'espacement entre le bord d'attaque (17a) d'aile portante et la coque (2) est d'environ 0,2 à environ 0,5 fois la longueur de la corde.

7. Navire selon l'une quelconque des revendications précédentes, dans lequel la longueur de corde est d'environ 2 % à environ 10 % d'une longueur longitudinale de la coque au niveau de la ligne de flottaison (10).

8. Navire selon l'une quelconque des revendications précédentes, comprenant en outre un évidement (16) formé dans la partie de coque arrière (9) s'étendant vers l'avant depuis l'extrémité arrière, dans lequel l'emplacement où, en utilisation, la partie de coque arrière (9) quitte l'eau est situé dans une projection verticale de l'évidement (16) et dans lequel l'aile portante (17) est positionnée au moins partiellement dans une projection verticale de l'évidement (16).

9. Navire selon la revendication 8, dans lequel la coque (2) comporte un boudin (41, 41') situé de chaque côté de la coque au niveau de la partie arrière, chaque boudin définissant au moins une partie latérale de l'évidement (16) et, en utilisation, s'étendant verticalement en dessous de la surface de l'eau, dans lequel l'aile portante (17) est montée sur, et entre, les boudins en dessous de la surface de l'eau.

10. Navire selon la revendication 8, dans lequel l'aile portante (17) est positionnée avec le bord d'attaque (17a) à environ 0,5 fois ou moins la longueur de corde en face de l'emplacement où, en utilisation, la partie de coque arrière (9) quitte l'eau à environ 0,75 fois la longueur de corde derrière l'emplacement où la partie de coque arrière (9) quitte l'eau, dans la direction longitudinale.

11. Navire selon l'une quelconque des revendications précédentes, dans lequel une surface de fond de la partie de coque arrière (9) dans une région à proximité de l'extrémité arrière est inclinée par rapport à la surface de fond de la partie de coque arrière distante de l'extrémité arrière, et dans lequel l'angle entre l'horizontale et la tangente à la coque (2) dans la région inclinée pris dans un plan vertical au niveau de la position longitudinale du bord d'attaque (17a) de l'aile portante est d'environ 11° à environ 25°.

12. Navire selon l'une quelconque des revendications précédentes, dans lequel une partie de l'aile portante (17) incluant le bord d'attaque (17a) s'étend sous la partie de coque arrière (9) à l'avant de l'emplacement longitudinal où, en utilisation, la partie de coque arrière (9) quitte la surface de l'eau, dans lequel l'angle entre l'horizontale et la tangente à la coque (2) à l'emplacement où la partie de coque arrière (9) quitte l'eau pris dans un plan vertical est d'environ 8° à environ 16°, et dans lequel l'angle d'inclinaison de l'aile portante (17) est inférieur ou égal à environ 12°.

13. Navire selon l'une quelconque des revendications précédentes, dans lequel le bord d'attaque de l'aile portante (17a) est incliné selon un angle vers le bas par rapport à l'horizontale d'un angle qui est supérieur à zéro degré et inférieur ou égal à 22°, et
dans lequel la longueur de corde est d'environ 2 % à environ 10 % de la longueur longitudinale de la coque (2) au niveau de la ligne de flottaison (10).
